# EUROPÄISCHE PATENTANMELDUNG

(11) **EP 2 568 242 A1**
(43) Veröffentlichungstag der Anmeldung: **13.03.2013**
(21) Anmeldenummer: 11008535.4
(22) Anmeldetag: 25.10.2011
(51) Int. Cl.: F25J 3/04

(54) **Verfahren und Vorrichtung zur Gewinnung von Stahl**

(30) Priorität: 08.09.2011 DE 102011112909
(71) Anmelder: Linde Aktiengesellschaft, 80331 Munich (DE)
(72) Erfinder: Schwenk, Dirk, Dr., 85609 Aschheim (DE)
(74) Vertreter: Imhof, Dietmar

(57) **Zusammenfassung**

Das Verfahren und die Vorrichtung dienen zur Gewinnung von Stahl in einem kombinierten System aus einer Stahlgewinnungseinheit und einer Tieftemperatur-Luftzerlegungsanlage. Die Stahlgewinnungseinheit weist mindestens einen Hochofen (4) und einen Stahlkonverter (5) auf. Atmosphärische Luft wird als Hochofenluft (1) einem Hochofenverdichter (2) zugeleitet und dort verdichtet. Die verdichtete Hochofenluft (3) wird in den Hochofen eingeleitet. In der Tieftemperatur-Luftzerlegungsanlage wird Einsatzluft in einem Hauptluftverdichter (7) verdichtet, die verdichtete Einsatzluft (8) in einem Hauptwärmetauscher abgekühlt, und die abgekühlte Einsatzluft in ein Destilliersäulen-System zur Stickstoff-Sauerstoff-Trennung eingeleitet, das eine Niederdrucksäule und eine Hochdrucksäule aufweist. Die gesamte Einsatzluft wird in dem Hauptluftverdichter (7) auf einen ersten Luftdruck verdichtet, der mindestens 4 bar über dem Betriebsdruck der Hochdrucksäule liegt. Ein erster Sauerstoffstrom wird flüssig aus dem Destilliersäulen-System zur Stickstoff-Sauerstoff-Trennung abgezogen, in flüssigem Zustand auf einen ersten Sauerstoffdruck gebracht, der höher als der Betriebsdruck der Niederdrucksäule ist. Der flüssig auf Druck gebrachte erste Sauerstoffstrom wird unter dem ersten Sauerstoffdruck in dem Hauptwärmetauscher verdampft und angewärmt. Der angewärmte erste Sauerstoffstrom (10, 12) wird unter einem ersten Produktdruck als erster Sauerstoffproduktstrom dem Stahlkonverter (5) zugeführt. Ein zweiter Sauerstoffstrom wird aus dem Destilliersäulen-System zur Stickstoff-Sauerstoff-Trennung abgezogen und unter einem zweiten Sauerstoffdruck, der niedriger als der erste Sauerstoffdruck ist, in dem Hauptwärmetauscher angewärmt. Der angewärmte zweite Sauerstoffstrom (20, 25) wird unter einem zweiten Produktdruck, der niedriger ist als der erste Produktdruck, der Hochofenluft (1, 3) stromaufwärts oder stromabwärts des Hochofenverdichters (2) zugeleitet.

## Beschreibung

Die Erfindung betrifft ein Verfahren zur Gewinnung von Stahl in einem kombinierten System aus einer Stahlgewinnungseinheit und einer Tieftemperatur-Luftzerlegungsanlage, wobei die Stahlgewinnungseinheit mindestens einen Hochofen und einen Stahlkonverter aufweist.

Tieftemperatur-Luftzerlegungsanlagen sind zum Beispiel aus Hausen/Linde, Tieftemperaturtechnik, 2. Auflage 1985, Kapitel 4 (Seiten 281 bis 337) bekannt.

Das Destilliersäulen-System der Erfindung kann als Zwei-Säulen-System (zum Beispiel als klassisches Linde-Doppelsäulensystem), oder auch als Drei- oder Mehr-Säulen-System ausgestaltet sein. Es kann zusätzlich zu den Kolonnen zur Stickstoff-Sauerstoff-Trennung weitere Vorrichtungen zur Gewinnung hochreiner Produkte und/oder anderer Luftkomponenten, insbesondere von Edelgasen aufweisen, beispielsweise eine Argongewinnung und/oder eine Krypton-Xenon-Gewinnung.

Bei dem Prozess wird ein flüssig auf Druck gebrachter Sauerstoff-Produktstrom gegen einen Wärmeträger verdampft und schließlich als gasförmiges Druckprodukt gewonnen. Diese Methode wird auch als Innenverdichtung bezeichnet. Sie dient zur Gewinnung von Drucksauerstoff.

Gegen den verdampfenden Produktstrom wird ein unter hohem Druck stehender Wärmeträger verflüssigt. Der Wärmeträger wird häufig durch einen Teil der Luft gebildet, im vorliegenden Fall von dem "zweiten Teilstrom" der verdichteten Einsatzluft.

Innenverdichtungsverfahren sind zum Beispiel bekannt aus DE 830805, DE 901542 (= US 2712738/US 2784572), DE 952908, DE 1103363 (= US 3083544), DE 1112997 (= US 3214925), DE 1124529, DE 1117616 (= US 3280574), DE 1226616 (= US 3216206), DE 1229561 (= US 3222878), DE 1199293, DE 1187248 (= US 3371496), DE 1235347, DE 1258882 (= US 3426543), DE 1263037 (= US 3401531), DE 1501722 (= US 3416323), DE 1501723 (= US 3500651), DE 253132 (= US 4279631), DE 2646690, EP 93448 B1 (= US 4555256), EP 384483 B1 (= US 5036672), EP 505812 B1 (= US 5263328), EP 716280 B1 (= US 5644934), EP 842385 B1 (= US 5953937), EP 758733 B1 (= US 5845517), EP 895045 B1 (= US 6038885), DE 19803437 A1, EP 949471 B1 (= US 6185960 B1), EP 955509 A1 (= US 6196022 B1), EP 1031804 A1 (= US 6314755), DE 19909744 A1, EP 1067345 A1 (= US 6336345), EP 1074805 A1 (= US 6332337), DE 19954593 A1, EP 1134525 A1 (= US 6477860), DE 10013073 A1, EP 1139046 A1, EP 1146301 A1, EP 1150082 A1, EP 1213552 A1, DE 10115258 A1, EP 1284404 A1 (= US 2003051504 A1), EP 1308680 A1 (= US 6612129 B2), DE 10213212 A1, DE 10213211 A1, EP 1357342 A1 oder DE 10238282 A1 DE 10302389 A1, DE 10334559 A1, DE 10334560 A1, DE 10332863 A1, EP 1544559 A1, EP 1585926 A1, DE 102005029274 A1 EP 1666824 A1,EP 1672301 A1, DE 102005028012 A1, WO 2007033838 A1, WO 2007104449 A1, EP 1845324 A1, DE 102006032731 A1, EP 1892490 A1, DE 102007014643 A1, A1, EP 2015012 A2, EP 2015013 A2, EP 2026024 A1 , WO 2009095188 A2 oder DE 102008016355 A1.

Der "Hauptwärmetauscher" dient zur Abkühlung von Einsatzluft in indirektem Wärmeaustausch mit Rückströmen aus dem Destilliersäulen-System. Es kann aus einem einzelnen oder mehreren parallel und/oder seriell verbundenen Wärmetauscherabschnitten gebildet sein, zum Beispiel aus einem oder mehreren Plattenwärmetauscher-Blöcken.

Ein Verfahren und eine entsprechende Vorrichtung der eingangs genannten Art sind aus US 5538534 bekannt. Hier wird ein Sauerstoffstrom in einer Tieftemperatur-Luftzerlegungsanlage mittels Innenverdichtung unter einem erhöhten Druck gewonnen und anschließend auf verschiedene Verbraucher innerhalb einer Stahlgewinnungseinheit aufgeteilt, insbesondere auf einen Hochofen und einen Stahlkonverter.

Der Erfindung liegt die Aufgabe zugrunde, ein verbessertes Verfahren und eine entsprechende Vorrichtung anzugeben, die besonders effizient sind und insbesondere einen besonders niedrigen Energieverbrauch aufweisen.

Diese Aufgabe wird durch die Merkmale des Patentanspruchs 1 gelöst.

Im Rahmen der Erfindung wird in der Tieftemperatur-Luftzerlegungsanlage neben dem innenverdichteten Hochdruckprodukt ("erster Sauerstoffstrom") noch mindestens ein weiteres Sauerstoffprodukt unter niedrigerem Druck erzeugt werden. Dieser Druck wird dem Druck vor oder nach dem Hochofenverdichter angepasst. Auf diese Weise wird die Tieftemperatur-Luftzerlegungsanlage spürbar effizienter betrieben und besser mit der Stahlgewinnungseinheit integriert. Insbesondere kann der "erste Luftdruck", auf den die Gesamtluft verdichtet wird, spürbar verringert werden. Dadurch kann einerseits der Energieverbrauch der Tieftemperatur-Luftzerlegungsanlage verringert werden; andererseits kann ein weniger aufwändiger Hauptluftverdichter verwendet und damit eine Verringerung des apparativen Aufwands erzielt werden. Das erfindungsgemäße Verfahren kann beispielsweise bei der Modernisierung bestehender Stahlwerke genutzt werden.

In einer speziellen Ausführungsform der Erfindung wird ein dritter Sauerstoffstrom aus dem Destilliersäulen-System zur Stickstoff-Sauerstoff-Trennung abgezogen und unter einem dritten Sauerstoffdruck, der niedriger als der zweite Sauerstoffdruck ist, in dem Hauptwärmetauscher angewärmt; der angewärmte dritte Sauerstoffstrom wird unter einem dritten Produktdruck, der niedriger ist als der zweite Produktdruck, der Hochofenluft stromaufwärts des Hochofenverdichters zugeleitet; der angewärmte zweite Sauerstoffstrom der Hochofenluft wird stromabwärts des Hochofenverdichters zugeleitet. Hier erzeugt die Tieftemperatur-Luftzerlegungsanlage den Sauerstoff also unter drei Druckniveaus und der Sauerstoff wird an drei Stellen der Stahlgewinnungseinheit zugeführt, nämlich einerseits dem Stahlkonverter und andererseits der Hochofenluft sowohl stromaufwärts wie stromabwärts des Hochofenverdichters. Je nach aktuellen Randbedingungen kann dies besonders effizient sein. Insbesondere ist die zulässige Sauerstoffkonzentration in Hochofenverdichtern häufig auf einen Wert begrenzt, der niedriger als die Sauerstoffkonzentration, die für den Betrieb des Hochofens wünschenswert ist. Mit dieser Variante können die Sauerstoffkonzentrationen in Hochofenverdichter und Hochofen unabhängig voneinander gewählt und trotzdem der Betrieb der Tieftemperatur-Luftzerlegungsanlage optimiert werden.

Der dritte Sauerstoffstrom wird vorzugsweise unmittelbar gasförmig aus der Niederdrucksäule entnommen.

Sowohl bei zwei als auch bei drei Sauerstoffdrücken kann es günstig sein, den zweiten Sauerstoffstrom ebenfalls unter erhöhtem Druck (einem "zweiten Sauerstoffdruck", der höher als der Betriebsdruck der Niederdrucksäule) zu gewinnen und ihn dazu ähnlich wie den ersten Sauerstoffstrom innenzuverdichten. Dazu wird der zweite Sauerstoffstrom flüssig aus dem Destilliersäulen-System zur Stickstoff-Sauerstoff-Trennung abgezogen, in flüssigem Zustand mindestens auf den zweiten Sauerstoffdruck gebracht, und der flüssig auf Druck gebrachte zweite Sauerstoffstrom wird unter dem zweiten Sauerstoffdruck in dem Hauptwärmetauscher verdampft.

Der zweite Sauerstoffstrom kann beispielsweise unabhängig vom ersten flüssig auf den zweiten Sauerstoffdruck gebracht werden. Alternativ dazu wird er in einem integrierten Sauerstoffpumpensystem gemeinsam mit dem ersten Sauerstoffstrom auf den ersten Sauerstoffdruck gebracht und vor der Einleitung in den Hauptwärmetauscher auf den zweiten Sauerstoffdruck entspannt.

Es ist ferner günstig, wenn der erste Luftdruck weniger als 10 bar über dem Betriebsdruck der Hochdrucksäule liegt. Dies ermöglicht den Einsatz eines kostengünstigen Hauptluftverdichters.

Der Hauptluftverdichter bildet vorzugsweise den einzigen mit externer Energie angetriebenen Verdichter für Luft der Tieftemperatur-Luftzerlegungsanlage. Er kann beispielsweise von einem Elektromotor, einem Dieselmotor oder einer Gas- oder Dampfturbine angetrieben werden. Weitere Gasverdichter für Einsatzluft und für Sauerstoff gibt es entweder in der Tieftemperatur-Luftzerlegungsanlage nicht, oder sie werden mittels innerhalb der Tieftemperatur-Luftzerlegungsanlage erzeugter Energie angetrieben, also durch eine Entspannungsmaschine.

Eine solche Entspannungsmaschine kann beispielsweise mit einem Teil der Luft aus dem Hauptluftverdichter betrieben werden, indem ein erster Teilstrom der auf den ersten Luftdruck verdichteten Einsatzluft in einer Entspannungsmaschine arbeitsleistend entspannt und dem Destilliersäulen-System zur Stickstoff-Sauerstoff-Trennung, insbesondere der Hochdrucksäule, zugeleitet wird.

Ein zweiter Teilstrom der auf den ersten Luftdruck verdichteten Einsatzluft kann in einem Nachverdichter, der mechanisch mit der Entspannungsmaschine gekoppelt ist, auf einen zweiten Luftdruck nachverdichtet werden, der größer als der erste Luftdruck ist; der nachverdichtete zweite Teilstrom wird dann in dem Hauptwärmetauscher verflüssigt, und der verflüssigte zweite Teilstrom wird in das Destilliersäulen-System zur Stickstoff-Sauerstoff-Trennung eingeleitet.

In einer bevorzugten Variante wird die gesamte Einsatzluft auf den ersten und den zweiten Teilstrom aufgeteilt.

Alternativ wird dritter Teilstrom der auf den ersten Luftdruck verdichteten Einsatzluft unter dem ersten Luftdruck in dem Hauptwärmetauscher abgekühlt und mindestens teilweise verflüssigt und unterstützt dabei die Sauerstoffverdampfung.

Die Erfindung betrifft außerdem eine Vorrichtung zur Tieftemperaturzerlegung von Luft gemäß Patentanspruch 10. Die erfindungsgemäße Vorrichtung kann durch Vorrichtungsmerkmale ergänzt werden, die den Merkmalen der abhängigen Verfahrensansprüche entsprechen.

Die Erfindung sowie weitere Einzelheiten der Erfindung werden im Folgenden anhand eines in der Zeichnung schematisch dargestellten Ausführungsbeispiels näher erläutert, das die Verknüpfung zwischen den Komponenten des Systems zeigt, einer Tieftemperatur-Luftzerlegungsanlage, die einen kalten Teil 9 sowie einen Hauptluftverdichter 7 umfasst, und einer Stahlgewinnungseinheit, die in dem Beispiel einen Hochofen 4 und einen Stahlkonverter 5 aufweist. Alternativ kann sie auch zwei oder mehr Hochöfen und/oder zwei oder mehr Stahlkonverter enthalten. Der kalte Teil 9 der Tieftemperatur-Luftzerlegungsanlage enthält einen Hauptwärmetauscher und ein Destilliersäulen-System zur Stickstoff-Sauerstoff-Trennung mit Hochdrucksäule und Niederdrucksäule.

Über Leitung 1 wird atmosphärische Luft als Hochofenluft von einem Hochofenverdichter 2 angesaugt und auf einen Druck von etwa 8 bar gebracht. Die im Hochofenverdichter 2 verdichtete Hochofenluft 3 wird in den Hochofen 4 eingeleitet. Die Stahlgewinnungseinheit weist außerdem einen Stahlkonverter 5 auf.

Einsatzluft für die Tieftemperatur-Luftzerlegung 9 wird über Leitung 6 und den Hauptluftverdichter 7 aus der Atmosphäre angesaugt. Die gesamte Einsatzluft wird in dem Hauptluftverdichter 7 auf einen "ersten Luftdruck" verdichtet, der 4 bis 10 bar über dem Betriebsdruck der Hochdrucksäule liegt. In dem konkreten Beispiel liegt der erste Luftdruck bei etwa 14 bar.

Neben stickstoffreichem Produkt und/oder Restgas (nicht dargestellt) wird in der Tieftemperatur-Luftzerlegung 9 ein erster Sauerstoffstrom 10 mittels Innenverdichtung unter einem "ersten Sauerstoffdruck" gewonnen, der in dem Beispiel etwa 30 bar beträgt. Er muss deutlich höher als der Betriebsdruck des Stahlkonverters (etwa 15 bar = "erster Produktdruck") sein, weil mit ihm ein Gasdruckspeicher 11 aufgeladen wird. Aus dem Gasdruckspeicher 11 wird der erste Sauerstoffstrom unter dem ersten Produktdruck über Leitung 12 dem Stahlkonverter 5 zugeführt.

In einer ersten Variante des Ausführungsbeispiels wird ein zweiter Sauerstoffstrom 20 gasförmig der Niederdrucksäule entnommen, im Hauptwärmetauscher angewärmt und der Hochofenluft 1 stromaufwärts des Hochofenverdichters 2 zugeleitet. Die Hochofenluft wird dabei auf etwa 30 % Sauerstoff angereichert. Der "zweite Sauerstoffdruck" liegt in dem Beispiel in der Nähe des Atmosphärendrucks und beträgt etwa 1,1 bar; er ist - bis auf Druckverluste entlang des Strömungsweges - gleich dem "zweiten Produktdruck". Weitere gasförmige Sauerstoffprodukte werden in der Tieftemperatur-Luftzerlegungsanlage der ersten Variante nicht gewonnen.

Bei einer zweiten Variante des Ausführungsbeispiels wird der zweite Sauerstoffstrom 25 stattdessen analog zum ersten per Innenverdichtung gewonnen, aber unter einem "zweiten Sauerstoffdruck", der immer noch niedriger als der "erste Sauerstoffdruck" und etwa gleich dem Druck der Hochofenluft stromabwärts des Hochofenverdichters ist. Auch hier werden in der Tieftemperatur-Luftzerlegung 9 genau zwei Sauerstoffprodukte gewonnen.

Eine dritte Variante entspricht weitgehend der zweiten Variante. Zusätzlich wird jedoch ein dritter Sauerstoffstrom gewonnen, der dem "zweiten Sauerstoffstrom" 20 der ersten Variante entspricht. Auf diese Weise kann auch bei einer Begrenzung der zulässigen Sauerstoffkonzentration im Hochofenverdichter die maximale Sauerstoffmenge unter dem niedrigsten möglichen Druck abgegeben und damit Aufwand in der Tieftemperatur-Luftzerlegungsanlage gespart werden.

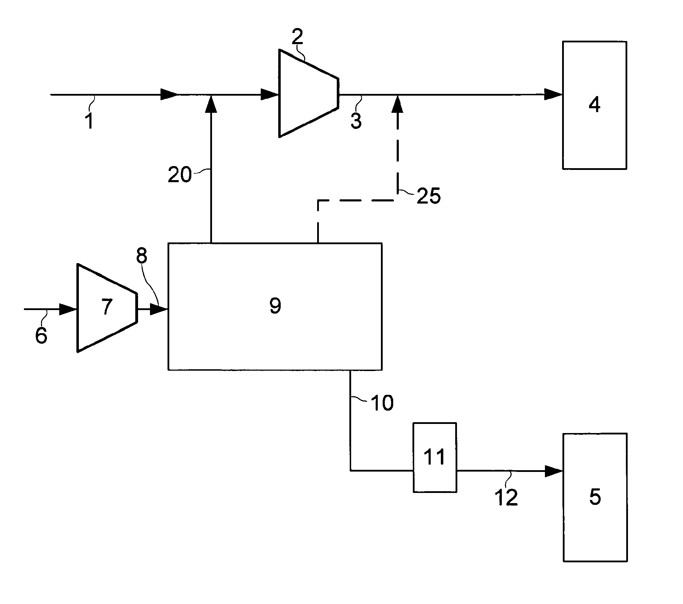

Die Tieftemperatur-Luftzerlegungsanlage des Ausführungsbeispiels für die Erfindung stimmt bis auf die im Folgenden beschriebenen Veränderungen mit dem Ausführungsbeispiel der Figur 1 WO 2007104449 A1 überein.

Zusätzlich zu dem dort gezeigten "ersten Sauerstoffstrom" wird in der ersten Variante des Ausführungsbeispiels der hier beschriebenen Erfindung ein "zweiter Sauerstoffstrom" gasförmig aus der Niederdrucksäule des Destilliersäulen-Systems zur Stickstoff-Sauerstoff-Trennung entnommen, vorzugsweise direkt oberhalb des Sumpfs. Nach dem Anwärmen im Hauptwärmetauscher wird er über Leitung 20 zum Eintritt des Hochofenverdichters 2 geleitet.

In der zweiten Variante des Ausführungsbeispiels der hier beschriebenen Erfindung ein "zweiter Sauerstoffstrom" gemeinsam mit dem ersten flüssig auf den "ersten Sauerstoffdruck" gebracht. Anschließend wird die Hochdruckflüssigkeit in den ersten und den zweiten Sauerstoffstrom verzweigt und der zweite Sauerstoffstrom auf den zweiten Sauerstoffdruck abgedrosselt. Letzterer wird dann unter diesem niedrigeren zweiten Sauerstoffdruck in den Hauptwärmetauscher eingeleitet und schließlich über Leitung 25 zum Austritt des Hochofenverdichters 2 geleitet.

Die dritte Variante des Ausführungsbeispiels der hier beschriebenen Erfindung kombiniert diese beiden Maßnahmen.

## Patentansprüche

1. Verfahren zur Gewinnung von Stahl in einem kombinierten System aus einer Stahlgewinnungseinheit und einer Tieftemperatur-Luftzerlegungsanlage, wobei die Stahlgewinnungseinheit mindestens einen Hochofen (4) und einen Stahlkonverter (5) aufweist, wobei
- atmosphärische Luft als Hochofenluft (1) einem Hochofenverdichter (2) zugeleitet und dort verdichtet und
- die verdichtete Hochofenluft (3) in den Hochofen eingeleitet wird,
und wobei in der Tieftemperatur-Luftzerlegungsanlage
- Einsatzluft in einem Hauptluftverdichter (7) verdichtet wird,
- die verdichtete Einsatzluft (8) in einem Hauptwärmetauscher abgekühlt wird,
- die abgekühlte Einsatzluft in ein Destilliersäulen-System zur Stickstoff-Sauerstoff-Trennung eingeleitet wird, das eine Niederdrucksäule und eine Hochdrucksäule aufweist,
- die gesamte Einsatzluft in dem Hauptluftverdichter (7) auf einen ersten Luftdruck verdichtet wird, der mindestens 4 bar über dem Betriebsdruck der Hochdrucksäule liegt,
- ein erster Sauerstoffstrom flüssig aus dem Destilliersäulen-System zur Stickstoff-Sauerstoff-Trennung abgezogen, in flüssigem Zustand auf einen ersten Sauerstoffdruck gebracht wird, der höher als der Betriebsdruck der Niederdrucksäule ist,
- der flüssig auf Druck gebrachte erste Sauerstoffstrom unter dem ersten Sauerstoffdruck in dem Hauptwärmetauscher verdampft und angewärmt wird,
- der angewärmte erste Sauerstoffstrom (10, 12) unter einem ersten Produktdruck als erster Sauerstoffproduktstrom dem Stahlkonverter (5) zugeführt wird,
- ein zweiter Sauerstoffstrom aus dem Destilliersäulen-System zur Stickstoff-Sauerstoff-Trennung abgezogen und unter einem zweiten Sauerstoffdruck, der niedriger als der erste Sauerstoffdruck ist, in dem Hauptwärmetauscher angewärmt wird,
- der angewärmte zweite Sauerstoffstrom (20, 25) unter einem zweiten Produktdruck, der niedriger ist als der erste Produktdruck, der Hochofenluft (1, 3) stromaufwärts oder stromabwärts des Hochofenverdichters (2) zugeleitet wird.

2. Verfahren nach Anspruch 1, **dadurch gekennzeichnet, dass** ein dritter Sauerstoffstrom aus dem Destilliersäulen-System zur Stickstoff-Sauerstoff-Trennung abgezogen und unter einem dritten Sauerstoffdruck, der niedriger als der zweite Sauerstoffdruck ist, in dem Hauptwärmetauscher angewärmt wird, der angewärmte dritte Sauerstoffstrom (20) unter einem dritten Produktdruck, der niedriger ist als der zweite Produktdruck, der Hochofenluft (1) stromaufwärts des Hochofenverdichters (2) zugeleitet wird und der angewärmte zweite Sauerstoffstrom (25) der Hochofenluft (3) stromabwärts des Hochofenverdichters (2) zugeleitet wird.

3. Verfahren nach Anspruch 1 oder 2, **dadurch gekennzeichnet, dass** der zweite Sauerstoffdruck höher als der Betriebsdruck der Niederdrucksäule ist, der zweite Sauerstoffstrom flüssig aus dem Destilliersäulen-System zur Stickstoff-Sauerstoff-Trennung abgezogen, in flüssigem Zustand mindestens auf den zweiten Sauerstoffdruck gebracht wird, und der flüssig auf Druck gebrachte zweite Sauerstoffstrom unter dem zweiten Sauerstoffdruck in dem Hauptwärmetauscher verdampft wird.

4. Verfahren nach einem der Ansprüche 1 bis 3, **dadurch gekennzeichnet, dass** der erste Luftdruck weniger als 10 bar über dem Betriebsdruck der Hochdrucksäule liegt.

5. Verfahren nach einem der Ansprüche 1 bis 4, **dadurch gekennzeichnet, dass** der Hauptluftverdichter den einzigen mit externer Energie angetriebenen Verdichter für Luft der Tieftemperatur-Luftzerlegungsanlage bildet.

6. Verfahren nach einem der Ansprüche 1 bis 5, **dadurch gekennzeichnet, dass** ein erster Teilstrom der auf den ersten Luftdruck verdichteten Einsatzluft in einer oder mehreren Entspannungsmaschinen arbeitsleistend entspannt und dem Destilliersäulen-System zur Stickstoff-Sauerstoff-Trennung, insbesondere der Hochdrucksäule, zugeleitet wird.

7. Verfahren nach Anspruch 6, **dadurch gekennzeichnet, dass** ein zweiter Teilstrom der auf den ersten Luftdruck verdichteten Einsatzluft in einem oder mehreren Nachverdichtern, die mechanisch mit der oder den Entspannungsmaschinen gekoppelt sind, auf einen zweiten Luftdruck nachverdichtet wird, der größer als der erste Luftdruck ist, der nachverdichtete zweite Teilstrom in dem Hauptwärmetauscher verflüssigt und der verflüssigte zweite Teilstrom in das Destilliersäulen-System zur Stickstoff-Sauerstoff-Trennung eingeleitet wird.

8. Verfahren nach Anspruch 7, **dadurch gekennzeichnet, dass** die gesamte Einsatzluft auf den ersten und den zweiten Teilstrom aufgeteilt wird.

9. Verfahren nach Anspruch 7, **dadurch gekennzeichnet, dass** ein dritter Teilstrom der auf den ersten Luftdruck verdichteten Einsatzluft unter dem ersten Luftdruck in dem Hauptwärmetauscher abgekühlt und mindestens teilweise verflüssigt wird.

10. Vorrichtung zur Gewinnung von Stahl mit einem kombinierten System aus einer Stahlgewinnungseinheit und einer Tieftemperatur-Luftzerlegungsanlage, wobei die Stahlgewinnungseinheit mindestens einen Hochofen (4) und einen Stahlkonverter (5) aufweist, und mit
- einer Hochofenluftleitung, über die atmosphärische Luft als Hochofenluft (1) einem Hochofenverdichter (2) zugeleitet und die im Hochofenverdichter (2) verdichtete Hochofenluft (3) in den Hochofen eingeleitet wird,
wobei die Tieftemperatur-Luftzerlegungsanlage
- ein Destilliersäulen-System zur Stickstoff-Sauerstoff-Trennung, das eine Niederdrucksäule und eine Hochdrucksäule aufweist,
- einen Hauptluftverdichter (7) zum Verdichten von Einsatzluft,
- einen Hauptwärmetauscher zum Abkühlen der verdichteten Einsatzluft und
- Mittel zum Einleiten der abgekühlten Einsatzluft in das Destilliersäulen-System zur Stickstoff-Sauerstoff-Trennung,
aufweist, wobei die Tieftemperatur-Luftzerlegungsanlage so ausgebildet ist, dass im Normalbetrieb
- die gesamte Einsatzluft in dem Hauptluftverdichter (7) auf einen ersten Luftdruck verdichtet wird, der mindestens 4 bar über dem Betriebsdruck der Hochdrucksäule liegt und
- ein erster Sauerstoffstrom flüssig aus dem Destilliersäulen-System zur Stickstoff-Sauerstoff-Trennung abgezogen, in flüssigem Zustand auf einen ersten Sauerstoffdruck gebracht wird, der höher als der Betriebsdruck der Niederdrucksäule ist, der flüssig auf Druck gebrachte erste Sauerstoffstrom unter dem ersten Sauerstoffdruck in dem Hauptwärmetauscher verdampft und angewärmt wird,
und mit
- Mitteln zum Zuführen des angewärmten ersten Sauerstoffstroms (10, 12) unter einem ersten Produktdruck als erster Sauerstoffproduktstrom zu dem Stahlkonverter (5),
- Mitteln zum Abziehen eines zweiten Sauerstoffstroms aus dem Destilliersäulen-System zur Stickstoff-Sauerstoff-Trennung und zum Zuführen des zweiten Sauerstoffstroms unter einem zweiten Sauerstoffdruck, der niedriger als der erste Sauerstoffdruck ist, zu dem Hauptwärmetauscher, und mit
- Mitteln zum Zuleiten der des im Hauptwärmetauscher angewärmten zweiten Sauerstoffstroms (20, 25) unter einem zweiten Produktdruck, der niedriger ist als der erste Produktdruck, zu der Hochofenluft (1, 3) stromaufwärts oder stromabwärts des Hochofenverdichters (2).
